# EUROPEAN PATENT APPLICATION

(11) **EP 3 628 377 A1**
(43) Date of publication of application: **01.04.2020**
(21) Application number: 19199623.0
(22) Date of filing: 25.09.2019
(51) Int. Cl.: A63B 22/06, A63B 69/16, B62M 6/50, G01L 3/02

(54) **DIRECT FORCE MEASUREMENT DEVICE FOR CRANK**

(30) Priority: 27.09.2018 TW 107133984
(71) Applicant: Bion Inc., 241 New Taipei City (TW)
(72) Inventor: Chen, Yu-Yu, 110 Taipei City (TW)
(74) Representative: Baudler, Ron

(57) **Abstract**

A force measurement device (2) is arranged in one of axle holes (11, 12) respectively formed in two ends of a crank (1). The force measurement device (2) includes a sensor seat (21) positioned in one of the axle holes (11, 12) and a plurality of stress detection units (22a, 22b, 22c, 22d) arranged on the sensor seat (21) in an annular configuration and spaced from each other by an angle. A calculation and transmission device (26) is electrically connected with the plurality of stress detection units (22a, 22b, 22c, 22d). When a force is applied in a force application direction (R) to the crank (1), the force is transmitted through the crank (1) to the sensor seat (21), and the plurality of stress detection units (22a, 22b, 22c, 22d) detect the force and generate and transmit a plurality of stress variation signals (S1, S2, S3, S4) corresponding to a magnitude of the force to the calculation and transmission device (26).

## Description

### BACKGROUND OF THE INVENTION

### 1. Field of the Invention

The present invention relates to a crank force measurement device, and in particular to a direct force measurement device for a crank.

### 2. The Related Arts

Bicycle riders may experience excellent effect of exercising by treading bicycle pedals. However, known bicycle designs provides no measures for the riders to be informed of a force applied thereby during treading the pedals. Consequently, the riders can only have the idea of an estimated amount of exercise that they take through readings of a simplified odometer or a rotational speed sensor.

In order to allow a rider to get aware of the magnitude of a force applied to tread the pedals during riding of a bicycle, bicycle manufacturers have proposed devices for detecting the power (which is an indication of force magnitude) that the rider applies in treading bicycle pedals. In such known devices, the force that a rider applies in riding a bicycle is measured through cranks of the bicycle.

A known technique that is used to measure the power resulting from a force that a rider applies in pedaling is disclosed in US Patent No. 9,417,144. In this patent, at least two strain gauges are provided on an outside surface of a crank and the magnitude of a force applied to the crank can be measured with the stain gauges.

Another example is US Patent No. 8,011,242, in which four sensors are arranged at each of two sides of a stator of a pedal axle to detect and analyze the magnitude of a force that is applied by a cyclist to pedals and a force application state of force distribution on surfaces of the bicycle pedals in order to allow the rider to acquire continuous data of an entire turn of revolution for the purposes of improving pedaling performance.

Further, US Patent No. 9,921,118 proposes a power measurement assembly mounted on an axle that is coupled to a crank of a bicycle or other exercise equipment. The power measurement assembly comprises a Wheatstone bridge circuit and strain gauge connected thereto. Through an output of force that a cyclist applies to the crank, the circuit is operated to measure twisting of the crank caused by a torque applied thereto with the strain gauges.

However, in practical uses, such known devices for measuring forces applied to bicycles suffer the following drawbacks:
(1) The structures are complicated and thus, the costs are high.
(2) The structures are complicated and thus, quality control is difficult.
(3) These known ways of measurement are all measurements made on surfaces or indirect measurements, and often have large values of errors.
(4) The known ways of surface measurement or indirect measurement are susceptible to incorrectness caused by external environments.
(5) The known ways of surface measurement or indirect measurement are susceptible to constraint of accuracy caused by mechanisms or materials.
(6) The known ways of surface measurement or indirect measurement, as being susceptible to constraint of accuracy caused by factors, such as environments, mechanisms, and materials, requires frequent calibration and correcting, otherwise the measurements made thereby are generally of no value.
(7) The known ways of surface measurement or indirect measurement are incapable of measuring variation of angle and power of each turn of revolution.

### SUMMARY OF THE INVENTION

Thus, the primary objective of the present invention is to provide a crank with direct force measurement device, which allows for measurement of a magnitude of a force that a user of a bicycle or exercise equipment applies during doing exercise by means of direct measurement.

The technical solation adopted in the present invention is a crank with direct force measurement device, in which a force measurement device is arranged in one of axle holes respectively formed in two ends of a crank. The force measurement device comprises a sensor seat positioned in one of the axle holes and a plurality of stress detection units arranged on the sensor seat in an annular configuration and spaced from each other by an angle. A calculation and transmission device is electrically connected with the plurality of stress detection units. When a force is applied in a force application direction to the crank, the force is transmitted through the crank to the sensor seat, and the plurality of stress detection units detect the force and generate and transmit a plurality of stress variation signals corresponding to a magnitude of the force to the calculation and transmission device.

In the above solution, the crank is made of a metallic material or a carbon fiber material.

In the above solution, the first axle hole is coupled to a crank axle or a chainwheel set of one of a bicycle, an electric bicycle, an exercise bike, a rowing machine, and rehabilitation or medical equipment; and the second axle hole is coupled to a pedal axle of a pedal of the one of the bicycle, the electric bicycle, the exercise bike, the rowing machine, and the rehabilitation or medical equipment. Alternatively, the first axle hole is coupled to the pedal axle of the pedal, and the second axle hole is coupled to the crank axle or the chainwheel set.

In the above solution, the sensor seat has an outer circumferential surface that is formed with a plurality of protrusions raised therefrom and spaced from each other by an angle, and the first axle hole of the crank is formed with a plurality of recesses respectively corresponding to the plurality of protrusions, such that the plurality of stress detection units are each arranged on one of a planar surface, a side surface, and a rear surface of an interior space of one of the protrusions.

In the above solution, the sensor seat comprises a polygonal structure, and the plurality of stress detection units are arranged on one of a side surface and an outer circumferential surface of the polygonal structure to be distributed in an annular configuration and spaced from each other by an angle.

In the above solution, the stress detection units are each one of a load cell, a semiconductor stress sensor, a capacitive stress sensor, and an inductive stress sensor.

In the above solution, the calculation and transmission device comprises a processor unit, which is electrically connected to the plurality of stress detection units; a wireless transmitter, which is electrically connected to the processor unit; a receiver, which is connectable, in a wireless manner, to the wireless transmitter, the receiver being provided with a display; and an electrical power supply unit, which supplies electrical power to the processor unit and the plurality of stress detection units. The processor unit receives the plurality of stress variation signals generated by the plurality of stress detection units when the crank receives the application of the force, and after processing, transmits a processed signal, in a wireless manner through the wireless transmitter, to the receiver to be displayed on the display of the receiver.

In the above solution, the calculation and transmission device further comprises an acceleration sensor or a magnetic sensor that is electrically connected to the processor unit to detect one of an angular speed and RPM rotational speed of the crank upon being moved by the application of the force.

In the above solution, the calculation and transmission device further comprises a GPS signal receiver circuit, which is electrically connected to the processor unit to detect a geographic location.

In the above solution, the second axle hole of the crank is additionally provided with a force measurement device.

In the above solution, the receiver is one of a vehicle odometer, a smart phone, a personal wearable device, a gateway, cloud or a wireless networks.

In the above solution, the calculation and transmission device includes an electrical power supply unit for supplying electrical power to the processor and the stress detection units.

The efficacy is that the present invention provides a solution for directly measuring the magnitude of a force that a user, when doing exercise, rehabilitation, or using medical equipment, applies to a bicycle, a rehabilitation device, medical equipment, or other exercise devices. The present invention has a simple structural arrangement and thus overcomes the problems of the prior art of having a high cost and being hard to control quality. The present invention adopts a solution of direct measurement of the magnitude of a force and as such, measurement errors are reduced; environmental influence is alleviated, influence of mechanisms or materials on accuracy is eliminated, and frequent calibration and correction of reading is not necessary. The technical solution of the present invention also allows for measurement of angular power variation in each turn.

Specific techniques that the present invention adopts will be further described with reference to the following embodiments and the attached drawings.

### BRIEF DESCRIPTION OF THE DRAWINGS

- **FIG. 1**: is a perspective view of a first embodiment of the present invention;
- **FIG. 2**: is an exploded view of the first embodiment of the present invention showing some components detached therefrom;
- **FIG. 3**: is another exploded view of the first embodiment of the present invention showing some components detached therefrom;
- **FIG. 4A**: illustrates, as an alternative, stress detection units of FIG. 3 are arranged in an annular configuration on an outer circumferential surface of a sensor seat as being spaced from each other by an angle;
- **FIG. 4B**: illustrates, as an alternative, stress detection units of FIG. 3 are arranged in an annular configuration and respectively on planar surfaces in interior spaces of protrusions of a sensor seat as being spaced from each other by an angle;
- **FIG. 4C**: illustrates, as an alternative, stress detection units of FIG. 3 are arranged in an annular configuration and respectively on lateral walls of interior spaces of protrusions of a sensor seat as being spaced from each other by an angle;
- **FIG. 4D**: illustrates, as an alternative, stress detection units of FIG. 3 are arranged in an annular configuration and respectively on rear walls of interior spaces of protrusions of a sensor seat as being spaced from each other by an angle;
- **FIG. 5A**: illustrates multiple stress detection units are arranged in an annular configuration on an outer surface of a hexagonal sensor seat as being spaced from each other by an angle;
- **FIG. 5B**: illustrates multiple stress detection units are arranged in an annular configuration on a side surface of a hexagonal sensor seat as being spaced from each other by an angle;
- **FIG. 6A**: illustrates multiple stress detection units are arranged in an annular configuration on an outer surface of an octagonal sensor seat as being spaced from each other by an angle;
- **FIG. 6B**: illustrates multiple stress detection units are arranged in an annular configuration on a side surface of an octagonal sensor seat as being spaced from each other by an angle;
- **FIG. 7**: illustrates a circuit function block diagram of the present invention;
- **FIG. 8**: is a perspective view of a second embodiment of the present invention;
- **FIG. 9**: illustrates stress detection units are arranged on a side wall of a sensor seat as being spaced from each other by an angle;
- **FIG. 10**: is a perspective view of a third embodiment of the present invention;
- **FIG. 11**: is an exploded view of the third embodiment of the present invention showing some components detached therefrom;
- **FIG. 12**: is an exploded view of a fourth embodiment of the present invention showing some components detached therefrom; and
- **FIG. 13**: is an exploded view of a fifth embodiment of the present invention showing some components detached therefrom.

### DETAILED DESCRIPTION OF THE PREFERRED EMBODIMENTS

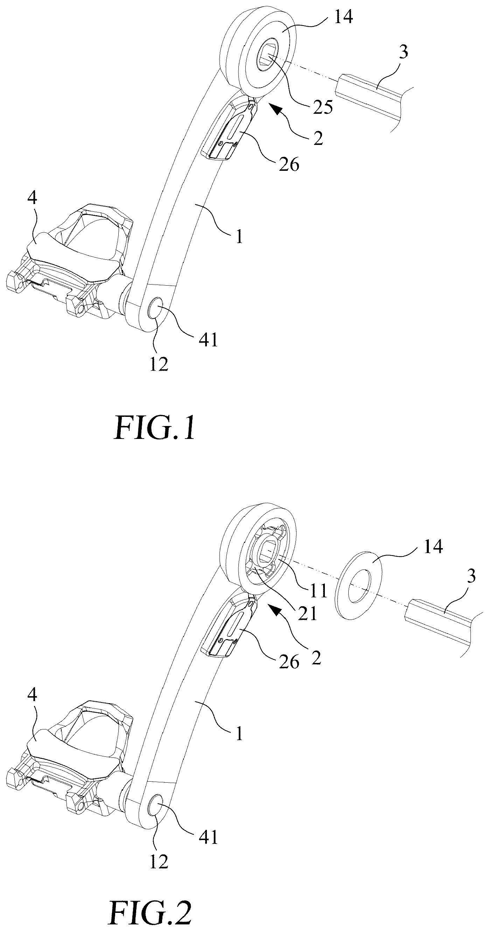

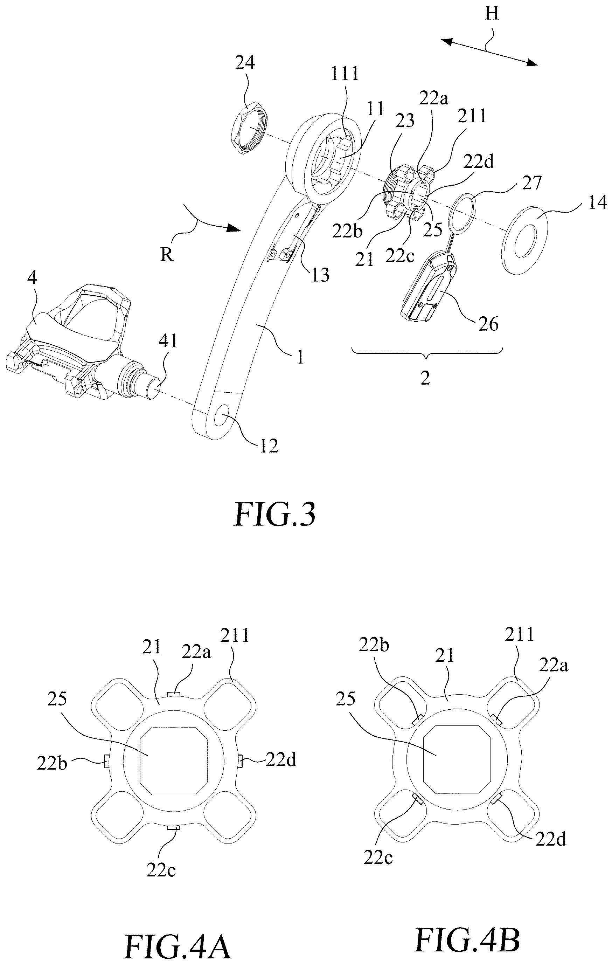

Referring simultaneously to FIGS. 1-3, FIG. 1 is a perspective view showing a crank with direct force measurement device according to a first embodiment of the present invention; and FIGS. 2 and 3 are exploded views showing the crank with direct force measurement device according to the first embodiment of the present invention with some components detached therefrom. As shown in the drawings, the present invention is structured such that a first axle hole 11 and a second axle hole 12 are respectively formed in two free ends of a crank 1 in a manner of being substantially perpendicular to the crank 1.

The present invention is further structured such that a force measurement device 2 is disposed at one of the two free ends of the crank 1 (namely the first axle hole 11 and/or the second axle hole 12), and the force measurement device 2 is arranged in a concentric manner with respect to the first axle hole 11 or the second axle hole 12 to measure a stress applied to the crank 1. In the instant embodiment, the force measurement device 2 is coupled to first axle hole 11 of the crank 1.

The force measurement device 2 comprises a sensor seat 21, which is fit and fixed in the axle hole 11 in a horizontal direction H that is perpendicular to the crank 1. The force measurement device 2 further comprises a plurality of stress detection units 22a, 22b, 22c, 22d that are arranged on (such as being mounted or attached to) a side surface of the sensor seat 21 in an annular configuration and are spaced from each other by an angle. The stress detection units can each be one of a load cell, a semiconductor stress sensor, a capacitive stress sensor, and an inductive stress sensor.

In a practical application, the first axle hole 11 of the crank 1 is coupled to for example a crank axle 3 or a chainwheel set of a bicycle, an electric bicycle, an exercise bike, a rowing machine, rehabilitation or medical equipment, and is arranged concentric with respect to the crank axle 3. The second axle hole 12 can be coupled to a pedal axle 41 of a pedal 4 on which a user may tread. The crank 1 can be made of a metallic material or a carbon fiber material.

In a preferred embodiment, the sensor seat 21 has an outer circumferential surface on which multiple protrusions 211 are raised and arranged in an annular configuration by spacing from each other by an angle, and correspondingly, recesses 111 are formed in the first axle hole 11 of the crank 1, so as to allow the sensor seat 21 to be securely mounted in the first axle hole 11 of the crank 1. In another preferred embodiment, the sensor seat 21 may be alternatively provided as having for example a polygonal outside surface structure, and this similarly allows the sensor seat 21 to be securely fixed in the first axle hole 11 of the crank 1.

The sensor seat 21 has an end from which a threaded section 23 is extended to engage with a known nut 24 to fix the sensor seat 21 in the axle hole 11 of the crank 1. The sensor seat 21 is formed with a central through hole 25 to allow for example the crank axle 3 of a bicycle, an electric bicycle, an exercise bike, a rowing machine, or rehabilitation or medical equipment to extend therethrough for coupling and fixing the crank 1 to the crank axle 3. After the sensor seat 21 is positioned in the first axle hole 11 of the crank 1, an outer lid 14 is applied for closure and protection.

The force measurement device 2 further comprises a calculation and transmission device 26. The calculation and transmission device 26 is disposed in a hollowed section 13 formed in the crank 1 and is electrically connected by conductor lines to the plurality of stress detection units 22a, 22b, 22c, 22d. A circuit board 27 is correspondingly disposed on the sensor seat 21 for connecting, through conductor lines, each of the stress detection units 22a, 22b, 22c, 22d to the calculation and transmission device 26.

Referring to FIG. 4A, an alternative arrangement is illustrated, in which as an alternative to being arranged on the side surface as shown in FIG. 3, the stress detection units 22a, 22b, 22c, 22d of the force measurement device 2 according to the present invention can alternatively be arranged in an annular configuration on an outer circumferential surface of the sensor seat 21 and spaced from each other by an angle, to similarly detect the magnitude of a force applied to the crank 1.

Referring to FIG. 4B, an alternative arrangement is illustrated, in which the stress detection units 22a, 22b, 22c, 22d of the force measurement device 2 according to the present invention can alternatively be arranged, respectively, on planar surfaces of interior spaces of the protrusions 211 of the sensor seat 21, to similarly detect the magnitude of a force applied to the crank 1.

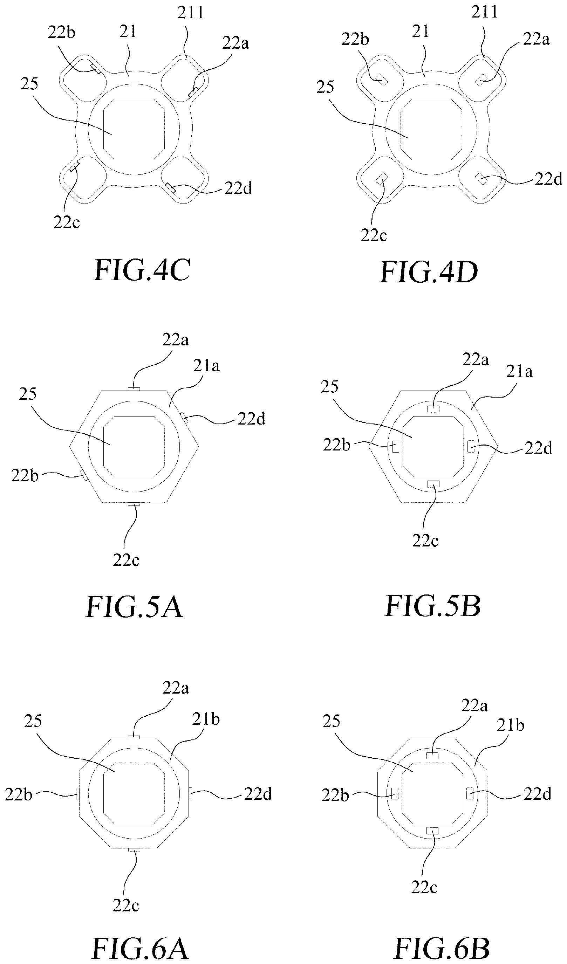

Referring to FIG. 4C, an alternative arrangement is illustrated, in which the stress detection units 22a, 22b, 22c, 22d of the force measurement device 2 are respectively arranged on lateral walls of the interior spaces of the protrusions 211 of the sensor seat 21, to similarly detect the magnitude of a force applied to the crank 1.

Referring to FIG. 4D, an alternative arrangement is illustrated, in which the stress detection units 22a, 22b, 22c, 22d of the force measurement device 2 are respectively arranged on rear walls of the interior spaces of the protrusions 211 of the sensor seat 21, to similarly detect the magnitude of a force applied to the crank 1.

The sensor seat 21 can alternatively be arranged to form a polygonal structure. For example, referring to FIG. 5A, the force measurement device 2 according to the present invention is alternatively arranged as a sensor seat 21a having a hexagonal structure and the stress detection units 22a, 22b, 22c, 22d are arranged on an outer surface of the hexagonal sensor seat 21a as being spaced from each other by an angle. In adopting such a structure of the instant embodiment, the first axle hole 11 of the crank 1 should be arranged as a corresponding or matched fitting structure.

Referring to FIG. 5B, being illustrated as an alternative, the stress detection units 22a, 22b, 22c, 22d of the force measurement device 2 according to the present invention are arranged in an annular configuration on a side surface of the hexagonal sensor seat 21a and spaced from each other by an angle.

Referring to FIG. 6A, being provided as an illustrative example, the force measurement device 2 according to the present invention can alternatively be arranged as a sensor seat 21b having an octagonal structure, and the stress detection units 22a, 22b, 22c, 22d are arranged on an outer surface of the octagonal seat 21b, as being spaced from each other by an angle.

Referring to FIG. 6B, being provided as an illustrative example, the stress detection units 22a, 22b, 22c, 22d of the force measurement device 2 according to the present invention are arranged in an annular configuration on a side surface of the octagonal sensor seat 21b and spaced from each other by an angle.

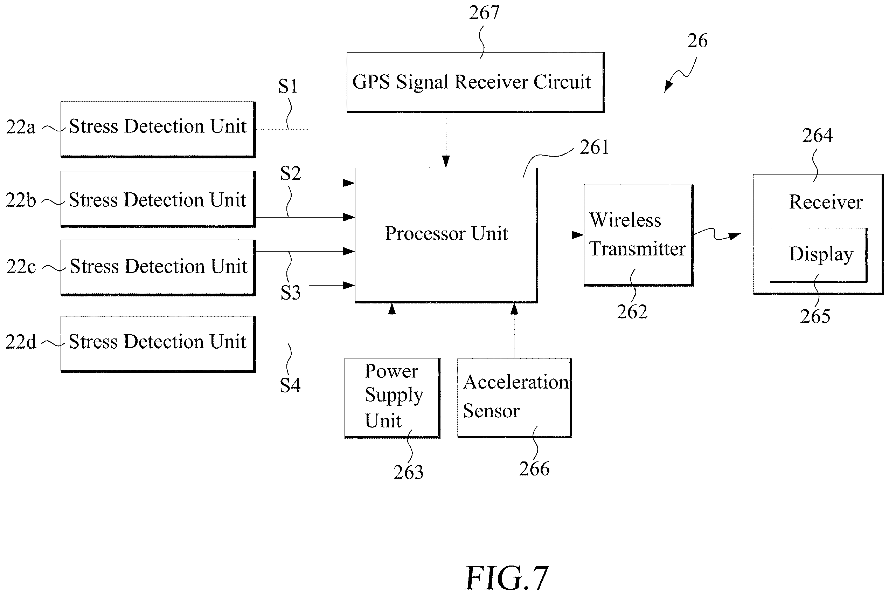

Referring to FIG. 7, the calculation and transmission device 26 comprises a processor unit 261, a wireless transmitter 262, and an electrical power supply unit 263. The processor unit 261 is electrically connected to the stress detection units 22a, 22b, 22c, 22d. The electrical power supply unit 263 (such as a battery or electric cell) supplies electrical power to the processor unit 261 and the stress detection units 22a, 22b, 22c, 22d for the operations thereof. The wireless transmitter 262 transmits, through a wireless manner (such as RF and Bluetooth), a signal to a receiver 264.

When a force is applied, in a force application direction R shown in FIG. 3, to the crank 1 (such as a user treading down the pedal 4), the force is transmitted through the crank 1 to the sensor seat 21, such that the plurality of stress detection units 22a, 22b, 22c, 22d may, theoretically, detect a variation of a magnitude of the force directly according to a cantilever arm theory to acquire highly accurate value of detection without being affected by factors of the surrounding environment.

The stress detection units 22a, 22b, 22c, 22d, in response to the variation of the force so detected, generate a plurality of stress variation signals S1, S2, S3, S4 that are transmitted to the processor unit 261 of the calculation and transmission device 26. Upon receiving the stress variation signals S1, S2, S3, S4 supplied from the stress detection units 22a, 22b, 22c, 22d, the processor unit 261 operates for signal processing and calculation (such as noise filtering, signal conversion, and value computation) and transmits, through the wireless transmitter 262, the result of the operation to a receiver 264 to be displayed on a display 265 of the receiver 264. The receiver 264 can be a receiver on or of a vehicle odometer, a smart phone, a personal wearable device, a gateway, cloud or a wireless network.

The calculation and transmission device 26 may also comprises an acceleration sensor 266, which is electrically connected to the processor unit 261 to detect angular velocity ωθ or RPM of rotation of the crank 1 during force application for exercise, and based on such data to calculate the magnitude of the force that the user applied to the pedal. The acceleration sensor 266 can be replaced by a magnetic sensor.

Since the stress detection units 22a, 22b, 22c, 22d are arranged in a configuration of being a circular arc and spaced from each by a constant spacing angle (such as 90 degrees or 45 degrees, the crank, when rotating, could collaborate with the acceleration sensor 266 to achieve, according to an amount of variation of angle, a more accurate measurement of the magnitude of a treading force that the user applies in each RPM (Round per minute) in cycling.

The calculation and transmission device 26 may also comprises a GPS signal receiver circuit 267, which transmits, through the wireless transmitter 262, a geographic location of the user in riding a bicycle.

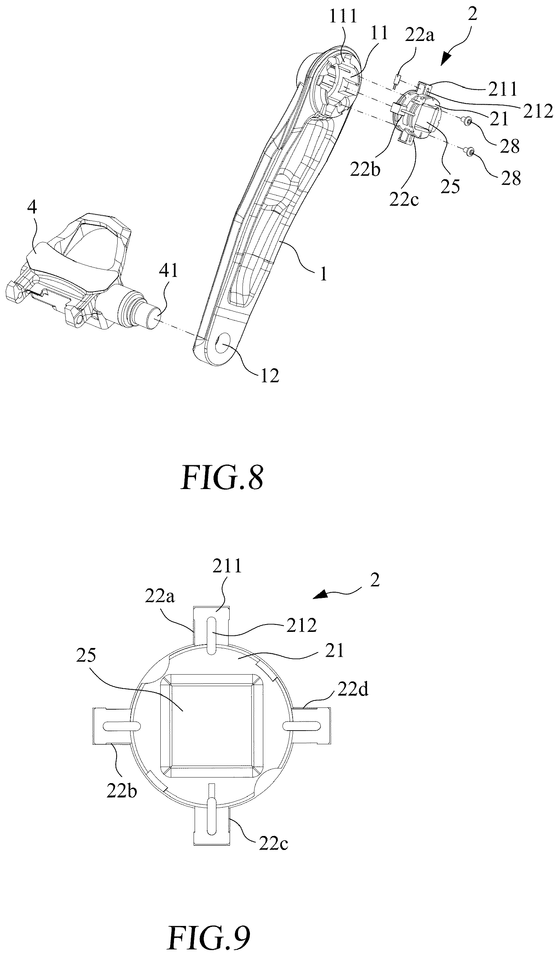

FIG. 8 shows a perspective view of a second embodiment of the crank with direct force measurement device according to the present invention. FIG. 9 illustrates stress detection units are arranged on a side surface of a sensor seat as being spaced from each other by an angle. The constituent components of the instant embodiment are generally similar to those of the first embodiment, and for consistency, similar components are designated with the same references.

In the second embodiment of the present invention, the sensor seat 21 has an outer circumferential surface including multiple protrusions 211 that are arranged in an annular configuration as being spaced from each other by an angle, and the first axle hole 11 of the crank 1 is formed with corresponding recesses 111, so that positioning elements 28 may be applied to fix and position the sensor seat 21 in the axle hole 11 of the crank 1.

The plurality of stress detection units 22a, 22b, 22c, 22d are respectively positioned in hollow sections that are formed in a side surface of the sensor seat 21. The stress detection units 22a, 22b, 22c, 22d are operable to detect the magnitude of a force applied to the crank 1. The sensor seat 21 is basically a solid structure, and may additionally formed with an opening 212 in each sensor seat 21, so that a width of the opening 212 may help increase or decrease the amount of deformation of the sensor seat 21 upon receiving a force applied thereto.

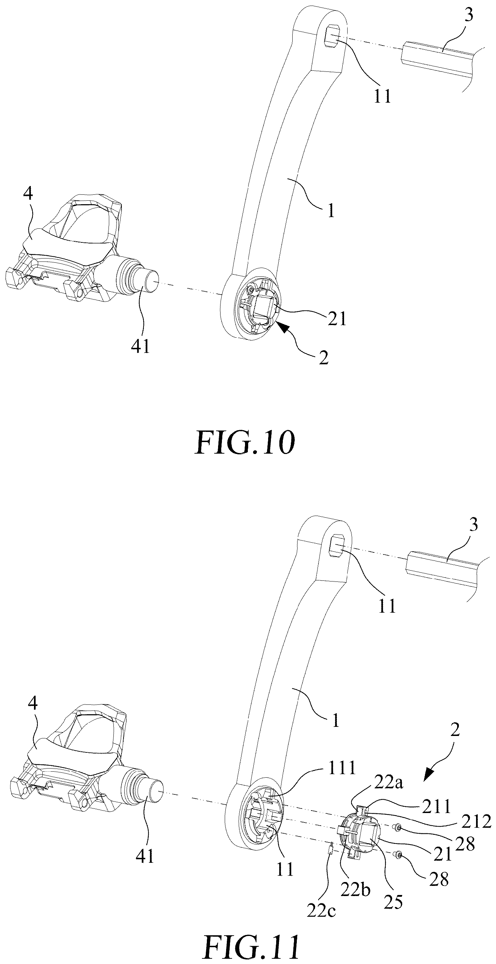

FIG. 10 shows a perspective view of a third embodiment of the crank with direct force measurement device according to the present invention. FIG. 11 is an exploded view of the third embodiment of the crank with direct force measurement device according to the present invention showing some components detached therefrom. The constituent components of the instant embodiment are generally similar to those of the second embodiment of FIGS. 8 and 10, and for consistency, similar components are designated with the same references. In the instant embodiment, the force measurement device 2 is coupled to the second axle hole 12 of the crank 1, and the second axle hole 12 is coupled to the pedal axle 41 of the pedal 4 of one of a bicycle, an electric bicycle, an exercise bike, a rowing machine, and rehabilitation or medical equipment. The first axle hole 11 is coupled to for example the crank axle 3 or the chainwheel set of the bicycle, electric bicycle, exercise bike, rowing machine, or the rehabilitation or medical equipment.

As shown in the drawings, when the sensor seat 21 is set in the second axle hole 12 of the crank 1, the pedal axle 41 of the pedal 4 may set through the central through hole 25 of the sensor seat 21.

The plurality of stress detection units 22a, 22b, 22c, 22d of the force measurement device 2 are arranged on a side surface of the sensor seat 21 in an annular configuration and spaced from each other by an angle. The stress detection units 22a, 22b, 22c, 22d may alternatively be arranged on an outer circumferential surface of the sensor seat 21 or in the interior spaces of the protrusions 211 of the sensor seat 21 to be distributed in an annular configuration and spaced from each other by an angle.

When a user treads the pedal 4, the pedal axle 41 of the pedal 4 and the crank 1 demonstrate a relative rotational movement therebetween, and a force applied by the user to the pedal 4 is transmitted through the pedal axle 41 to the sensor seat 21, so that the stress detection units 22a, 22b, 22c, 22d may detect the force and the stress detection units 22a, 22b, 22c, 22d generate stress variation signals transmitted to the calculation and transmission device 26.

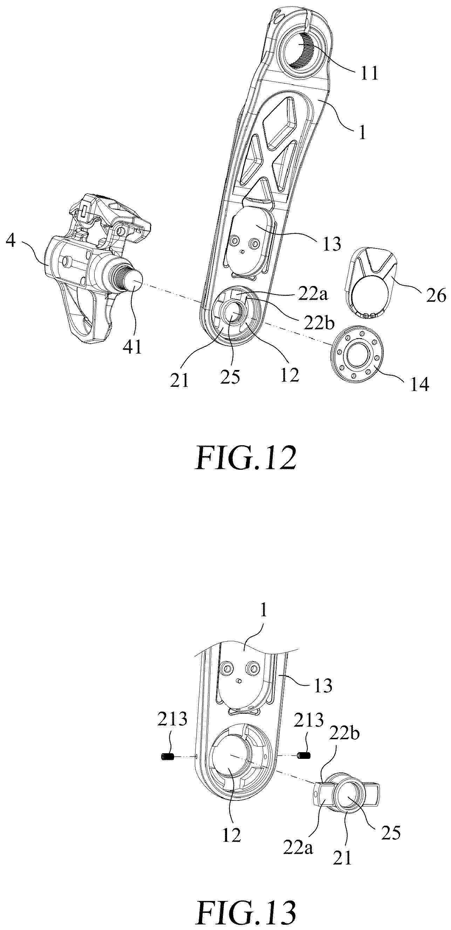

FIG. 12 shows an exploded view of a fourth embodiment of the present invention showing some components detached therefrom. Similar to the third embodiment shown in FIGS. 10 and 11, in the instant embodiment, the sensor seat 21 of the force measurement device 2 is formed integrally in the second axle hole 12 of the crank 1 and coupled to the pedal axle 41 of the pedal 4. Two stress detection units 22a, 22b of the force measurement device 2 are respectively arranged on a front surface and a side surface of the sensor seat 21. The calculation and transmission device 26 is arranged in a hollowed section 13 formed in the crank 1 and is connected through conductor lines to the plurality of stress detection units 22a, 22b.

FIG. 13 shows an exploded view of a fifth embodiment of the present invention showing some components detached therefrom. In the instant embodiment, the sensor seat 21 of the force measurement device 2 is detachable from the second axle hole 12 of the crank 1. The sensor seat 21 may be secured in the second axle hole 12 of the crank 1 by bolts 213 and then coupled to the pedal axle of the pedal (not shown).

The above embodiments are provided to illustrate the present invention, and they are not intended to limit the scope of the present invention. Equivalent modifications or substitutes that do not depart from the spirit of the present invention are considered falling in the scope of the appended claims.

## Claims

1. A direct force measurement device (2) for a crank (1) having a first axle hole (11) and a second axle hole (12) respectively formed in two free ends of the crank (1) in a horizontal direction (H) that is perpendicular to the crank (1), the force measurement device (2) being disposed in the first axle hole (11), **characterized in that** the force measurement device (2) comprises:
a sensor seat (21) including a central through hole (25) formed therein in the horizontal direction (H), the sensor seat (21) being positioned in one of the first axle hole (11) and the second axle hole (12) in the horizontal direction (H);
a plurality of stress detection units (22a, 22b, 22c, 22d) arranged on the sensor seat (21) in an annular configuration and are spaced from each other by an angle; and
a calculation and transmission device (26) electrically connected to the plurality of stress detection units (22a, 22b, 22c, 22d);
wherein when a force applied, in a force application direction (R), to the crank (1), the force is transmitted to the plurality of stress detection units (22a, 22b, 22c, 22d) of the sensor seat (21), so that the plurality of stress detection units (22a, 22b, 22c, 22d) detect a magnitude of the force and generate and transmit a plurality of stress variation signals (S1, S2, S3, S4) corresponding to the magnitude of the force to the calculation and transmission device (26).

2. The direct force measurement device (2) according to claim 1, **characterized in that** the crank (1) is made of a metallic material or a carbon fiber material.

3. The direct force measurement device (2) according to claim 1, **characterized in that** the first axle hole (11) is coupled to one of a crank axle and a chainwheel set of one of a bicycle, an electric bicycle, an exercise bike, a rowing machine, and rehabilitation or medical equipment; and the second axle hole (12) is coupled to a pedal axle of a pedal of the one of the bicycle, the electric bicycle, the exercise bike, the rowing machine, and the rehabilitation or medical equipment.

4. The direct force measurement device (2) according to claim 1, **characterized in that** the first axle hole (11) is coupled to a pedal axle of a pedal of one of a bicycle, an electric bicycle, an exercise bike, a rowing machine, and rehabilitation or medical equipment; and the second axle hole (12) is coupled to one of a crank axle and a chainwheel set of the one of the bicycle, the electric bicycle, the exercise bike, the rowing machine, and the rehabilitation or medical equipment.

5. The direct force measurement device (2) according to claim 1, **characterized in that** the sensor seat (21) has an outer circumferential surface that is formed with a plurality of protrusions (211) raised therefrom and spaced from each other by an angle, and the first axle hole (11) of the crank (1) is formed with a plurality of recesses (111) respectively corresponding to the plurality of protrusions (211), such that the plurality of stress detection units (22a, 22b, 22c, 22d) are each arranged on one of a planar surface, a side surface, and a rear surface of an interior space of one of the protrusions (211).

6. The direct force measurement device (2) according to claim 1, **characterized in that** the sensor seat (21) includes a polygonal structure, and the plurality of stress detection units (22a, 22b, 22c, 22d) are arranged on one of a side surface and an outer circumferential surface of the polygonal structure to be distributed in an annular configuration and spaced from each other by an angle.

7. The direct force measurement device (2) according to claim 1, **characterized in that** the stress detection units (22a, 22b, 22c, 22d) are each one of a load cell, a semiconductor stress sensor, a capacitive stress sensor, and an inductive stress sensor.

8. The direct force measurement device (2) according to claim 1, **characterized in that** the calculation and transmission device (26) includes:
a processor unit (261) electrically connected to the plurality of stress detection units (22a, 22b, 22c, 22d);
a wireless transmitter (262) electrically connected to the processor unit (261);
a receiver (264) connectable, in a wireless manner, to the wireless transmitter (262), the receiver (264) being provided with a display (265); and
an electrical power supply unit (263) for supplying an electrical power to the processor unit (261) and the plurality of stress detection units (22a, 22b, 22c, 22d);
wherein the processor unit (261) receives the plurality of stress variation signals (S1, S2, S3, S4) generated by the plurality of stress detection units (22a, 22b, 22c, 22d) when the crank (1) receives the application of the force, and after processing, transmits a processed signal, in a wireless manner through the wireless transmitter (262), to the receiver (264) to be displayed on the display (265) of the receiver (264).

9. The direct force measurement device (2) according to claim 8, **characterized in that** the calculation and transmission device (26) further comprises an acceleration sensor (266) or a magnetic sensor that is electrically connected to the processor unit (261) to detect one of an angular speed and RPM rotational speed of the crank (1) upon being moved by the application of the force.

10. The direct force measurement device (2) according to claim 8, **characterized in that** the calculation and transmission device (26) further comprises a GPS signal receiver circuit (267), which is electrically connected to the processor unit (261) to detect a geographic location.

11. The direct force measurement device (2) according to claim 1, **characterized in that** the second axle hole (12) of the crank (1) is additionally provided with a force measurement device (2).

12. The direct force measurement device (2) according to claim 8, **characterized in that** the receiver (264) is one of a vehicle odometer, a smart phone, a personal wearable device, a gateway, cloud or a wireless networks.

13. The direct force measurement device (2) according to claim 1, **characterized in that** the sensor seat (21) is formed integrally in one of the first axle hole (11) and the second axle hole (12).

14. The direct force measurement device (2) according to claim 1, **characterized in that** the sensor seat (21) is detachable from one of the first axle hole (11) and the second axle hole (12).
